# EUROPEAN PATENT APPLICATION

(11) **EP 2 533 613 A1**
(43) Date of publication of application: **12.12.2012**
(21) Application number: 11192196.1
(22) Date of filing: 06.12.2011
(51) Int. Cl.: H05B 37/02, F21S 8/08

(54) **Public space lighting**

(30) Priority: 06.06.2011 GB 201109483
(71) Applicant: Harrison, Richard, Hastings, Sussex TN35 4NR (GB)
(72) Inventor: Harrison, Richard, Hastings, Sussex TN35 4NR (GB)
(74) Representative: Tothill, John Paul

(57) **Abstract**

A device 2 for controlling public space lighting comprises means 12, 12, 22 for providing a first (decreased) voltage or a second (increased) voltage to a public space light 18. The device 2 supplies the second (increased) voltage to the light 18 when the presence of a person or vehicle is detected by a sensor 28 of the device 2 or when another similar device indicates that such a presence has been detected. When the presence of a person or vehicle is not detected for a pre-set period of time, the first (decreased) voltage is supplied to the light 18. The device 2 reduces the amount of energy consumed by the light 18 when a person or vehicle is not detected as being nearby but still maintains a low level of light.

## Description

The present invention relates to devices and methods for controlling public space lighting.

GB 2 444 734 A describes a street lighting system comprising a plurality of lamp posts. The lamp posts are provided with sensors for detecting the presence of vehicles passing along a roadway. The lamp posts are also provided with communication means for transmitting information about a vehicle's movement to co-located lamp posts. The system predicatively turns on lamps in advance of the arrival of a vehicle to ensure that a path is lit for the vehicle. When lighting is not required to light a path for a vehicle, the lamps are turned off to save energy.

A problem exists in the prior art in that the lights sometimes used in lamp posts (e.g. sodium, mercury or metal halide lights) can take a significant time to heat up and achieve full light output. There can, therefore, be a delay in turning the lights back on again after the lights have been turned off. A solution to that problem might be to use alternative types of lights that have reduced turn on times. However, it may not always be desirable or possible to do that.

The Applicant therefore believes that there remains scope for improvements in the controlling of public space lighting.

According to an aspect of the present invention there is provided a device for controlling public space lighting, the device comprising:
means for providing a first voltage to a light for a public space;
a sensor for detecting the presence of a person or vehicle, and/or a receiver configured to receive signals indicating that the presence of a person or vehicle has been detected by another device;
means for increasing the voltage provided to the light from the first voltage to a second voltage responsive to the presence of a person or vehicle being detected by the sensor, and/or responsive to a received signal indicating that the presence of a person or vehicle has been detected by another device; and
means for decreasing the voltage provided to the light from the second voltage to the first voltage after the presence of a person or vehicle has not been detected and/or has not been indicated as being detected for a predetermined amount of time.

According to another aspect of the present invention there is provided a device for controlling public space lighting, the device comprising:
means for providing a first voltage to a light for a public space;
a sensor for detecting the presence of a person or vehicle;
means for increasing the voltage provided to the light from the first voltage to a second voltage responsive to the presence of a person or vehicle being detected by the sensor;
a transmitter configured to transmit a signal to other devices that can control public space lighting, the transmitted signal indicating that the presence of a person or vehicle has been detected by the sensor;
a receiver configured to receive signals from other devices that can control public space lighting indicating that the presence of a person or vehicle has been detected by another device;
means for increasing the voltage provided to the light from the first voltage to the second voltage responsive to a received signal indicating that the presence of a person or vehicle has been detected by another device; and
means for decreasing the voltage provided to the light from the second voltage to the first voltage after the presence of a person or vehicle has not been detected and/or has not been indicated as being detected for a predetermined amount of time.

According to another aspect of the present invention there is provided method of controlling public space lighting, comprising:
providing a first voltage to a light for a public space;
detecting the presence of a person or vehicle with a sensor, and/or receiving signals from other devices indicating that the presence of a person or vehicle has been detected by another device;
increasing the voltage provided to the light from the first voltage to a second voltage responsive to the presence of a person or vehicle being detected by the sensor, and/or responsive to a received signal indicating that the presence of a person or vehicle has been detected by another device; and
decreasing the voltage provided to the light from the second voltage to the first voltage after the presence of a person or vehicle has not been detected and/or has not been indicated as being detected for a predetermined amount of time.

According to another aspect of the present invention there is provided method of controlling public space lighting, comprising:
providing a first voltage to a light for a public space;
detecting the presence of a person or vehicle with a sensor;
increasing the voltage provided to the light from the first voltage to a second voltage responsive to the presence of a person or vehicle being detected by the sensor;
transmitting a signal to other devices that can control public space lighting, the transmitted signal indicating that the presence of a person or vehicle has been detected by the sensor;
receiving signals from other devices that can control public space lighting indicating that the presence of a person or vehicle has been detected by another device;
increasing the voltage provided to the light from the first voltage to the second voltage responsive to a received signal indicating that the presence of a person or vehicle has been detected by another device; and
decreasing the voltage provided to the light from the second voltage to the first voltage after the presence of a person or vehicle has not been detected and/or has not been indicated as being detected for a predetermined amount of time.

The present invention accordingly provides an increased second voltage to a light for a public space when a person or vehicle is detected by the device or is indicated as being detected by another device so that that person or vehicle is provided with a pool of bright light as they move around.

The present invention also provides a reduced first voltage to the light when no person or vehicle has been detected or indicated as being detected for a pre-set period of time, thereby allowing for savings to be made in the energy consumption of the light.

Furthermore, the present invention increases/decreases the voltage supplied to the light rather than turning the light on/off. This can reduce or avoid the problems of any delays that a lamp may have in heating up and achieving full light output.

Moreover, the light is still provided with a voltage (albeit a decreased voltage) even when no person or vehicle has been detected. The resultant low level of light can give a feeling of security to people who are not detectable by the sensor of a device but can still see the light controlled by that device.

As will be appreciated, the first voltage that is provided to the light is accordingly a non-zero voltage. In other words, the light is on (emits light) when the first voltage is provided to the light and when the second voltage is provided to the light. In other words, the light is neither off when the first voltage is provided to the light nor off when the second voltage is provided to the light. As will be appreciated, increasing/decreasing the voltage provided to the light causes the light level provided by the light to increase/decrease.

The first voltage preferably has a first (nominal) (non-zero) peak voltage and the second voltage preferably has a second (nominal) (non-zero) peak voltage, wherein the first peak voltage is lower than the second peak voltage. In other words, the device provides two non-zero peak voltages to the light (such that the light is on when either of the voltages is provided to the light) rather than providing, for example, one non-zero peak voltage (to turn the light on) and zero volts (to turn the light off).

Preferably, the second voltage is a mains voltage, e.g. in the range 220V to 240V. Preferably, the first voltage is in the range 120V to 210V, e.g. approximately 160V.

Embodiments of the present invention preferably comprise a transformer, wherein the second voltage is provided to the input of the transformer and the first voltage is provided by the output of the transformer. The output voltage to input voltage ratio (output/input voltage ratio) provided by the transformer is preferably in the range 0.5 to 0.96. As will be appreciated, the output/input voltage ratio is calculated by dividing the output voltage by the input voltage.

In some embodiments, the transformer has a plurality of selectable output/input voltage ratios. An output/input voltage ratio for the transformer can be selected in any desired or suitable way. However, in a preferred embodiment, the output/input voltage ratio is automatically selected in order to maintain the first voltage within a predetermined voltage range (e.g. 120V to 210V) or at a predetermined voltage (e.g. 160V). The device therefore preferably comprises means for monitoring the first voltage and/or second voltage, and means for automatically selecting one of the plurality of output/input voltage ratios for the transformer.

In a particularly preferred embodiment, the plurality of selectable output/input voltage ratios comprises at least a first lower output/input voltage ratio and a second higher output/input voltage ratio. The first and second output/input voltage ratios are preferably both in the range 0.5-0.96 (e.g. a first ratio may be 0.66 and a second ratio may be 0.75). These embodiments are particularly advantageous in that they can compensate for fluctuations in the second voltage, e.g. fluctuations in the mains voltage, provided to the input of the transformer.

Preferably, the means for increasing/decreasing the voltage provided to the light comprises a relay for disconnecting/connecting the output of the transformer from/to the light, and/or a relay for connecting/disconnecting the second voltage to/from the light.

In some embodiments, a single relay is used to increase/decrease the voltage provided to the light. In other embodiments, a first relay is used to connect/disconnect the second voltage to/from the light and a second relay is used to disconnect/connect the output of the transformer from/to the light.

Preferably, the means for increasing/decreasing the voltage provided to the light comprises a relay for disconnecting/connecting the second voltage from/to the transformer (e.g. a third relay or, more preferably, the aforementioned first relay).

In preferred embodiments, the transformer is an autotransformer. The autotransformer preferably comprises a transformer winding having an input connection, an output connection, and a neutral connection. The input connection is preferably towards or at a first end of the winding and the neutral connection is preferably towards or at a second end of the winding. The output connection is preferably at a part of the winding that is intermediate the input connection and the neutral connection.

In embodiments in which a plurality of selectable output/input voltage ratios are provided, the autotransformer may comprise a plurality of selectable input connections respectively connected to different parts of the winding (towards or at the first end of the winding) and/or a plurality of selectable output connections respectively connected to different parts of the winding (that are intermediate the input connection(s) and the neutral connection).

Embodiments may also or instead comprise switching means for initially switching the light on and/or for later switching the light off. Embodiments of the present invention may comprise a daylight sensor, wherein the light for the public space is initially switched on by the switching means based on the amount of daylight that is detected by the daylight sensor. The switching means may also or instead be responsive to a timer in the device, or may be responsive to "on" and/or "off" commands provided from elsewhere outside of the device. For example, the "on" and/or "off" commands may be provided by an external controller that remotely controls one or more of the devices of the present invention as described herein.

The device may be configured or commanded to turn the light on and/or off at any desired time or daylight level. However, the device is preferably configured or commanded to turn the light on at dusk and/or off at dawn.

Embodiments of the present invention may comprise means for or steps of providing the second voltage to the light for a predetermined amount of time subsequent to the light initially being switching on. Preferably, the predetermined amount of time is between 5 and 30 minutes, more preferably between 5 and 15 minutes, and most preferably approximately 10 minutes. This can, e.g., allow the light sufficient time to initially switch on.

Preferably the sensor of the device comprises a passive infra red (PIR) detector. The PIR detector preferably comprises a dual PIR beam, i.e. two partially superimposed and/or offset beams. The device is preferably configured such that the presence of a person and/or vehicle is considered as being detected by the sensor if (and only if) the person and/or vehicle is detected with a first beam of the dual PIR beam and is detected with a second beam of the dual PIR beam. Furthermore, the device is preferably configured such that the presence of a person and/or vehicle is considered as being detected by the sensor if (and only if) the person and/or vehicle is detected by the first beam, and then detected by the second beam within a predetermined amount of time of being detected by the first beam (or vice versa). The sensor preferably detects and/or is responsive to the movement of a person and/or vehicle.

In embodiments that comprise a transmitter, the transmitter is preferably a (wireless) microwave or radio transmitter. The transmitter can preferably transmit signals over a distance of between 200m and 0.5 miles. Similarly, the receiver can preferably receive signals from a distance of between 200m and 0.5 miles away.

The present invention is particularly suitable for use with lights such as discharge lamps, e.g. sodium, mercury or metal halide lamps. However, the present invention can be used in conjunction with any desired or suitable light.

Preferably the light is a lamp post light, and the device of the present invention is preferably part of a lamp post.

Thus, according to another aspect of the present invention there is provided lamp post comprising a light for lighting a public space and a device for controlling public space lighting as described herein.

Preferably at least part of the device is fitted into the lighting column or adjacent to the control gear of the lamp post.

The sensor of the device is preferably mounted at or near the top of the lamp post, such that the sensor is able to detect the presence of a person or vehicle within a 360° detection cone that extends downwards and outwards from the sensor/top of the lamp post.

The device is preferably provided with an address that enables the device to be identified. The address or identifier can be provided to the device in any desired or suitable way. For example, the device may have fixed memory that stores the address or identifier for the device. The device may also or instead have a socket for receiving a portable memory (such as a card) that stores the address or identifier. The device may also or instead have a series of switches (e.g. DIP switches) for indicating an address or identifier.

In a preferred embodiment, the device has a socket for receiving a binary card. In a preferred embodiment the socket receives an 8 bit card, thereby providing the device with one of 256 unique addresses or identifiers.

In another preferred embodiment, the device has a set of switches for indicating a binary number. In a preferred embodiment there are 8 switches (DIP switches), thereby providing the device with one of 256 unique addresses or identifiers.

Preferably the device and/or lamp post of the present invention forms part of a public space lighting system having a plurality of devices for controlling public space lighting as described herein or having a plurality of lamp posts each comprising a device for controlling public space lighting as described herein.

Thus, according to further aspects of the present invention there is provided a public space lighting system. The public space lighting system comprises a plurality of devices for controlling public space lighting as described herein or comprises a plurality of lamp posts each having a device for controlling public space lighting as described herein.

One or more of the devices and/or lamp posts may form part of a "distribution circuit" of devices or lamp posts. The devices and/or lamp posts within a distribution circuit are preferably provided with electrical power from the same power distribution means (e.g. switchgear). The power distribution means may be capable, for example, of providing 12 kW. This would be enough power to supply 30 400 Watt lights.

One or more of the devices and/or lamp posts may also or instead form part of a "hub" of devices or lamp posts. Preferably, each device and/or lamp post within each hub has a unique address or identifier within the hub. The address or identifier for each device can be provided to the device using any of the techniques described hereinbefore.

The devices of one or more distribution circuits or of one or more hubs may form the public space lighting system provided herein.

In one example, a distribution circuit comprises 30 devices, and a hub comprises the devices of 4 distribution circuits. This gives a hub comprising 120 devices. In this example, an 8 bit address or identifier would be sufficient to uniquely address or identify the 120 devices.

A hub controller and/or hub monitor may be provided to control and/or monitor the devices of each hub of the system. A central controller and/or central monitor may also or instead be provided to control and/or monitor the devices of the public space lighting system as a whole.

Control of the hubs and/or system may include, for example, sending the aforementioned "off" and/or "on" commands to the one or more devices or lamp posts.

However, in particularly preferred embodiments, the system does not comprise a hub controller or a central controller (although the system may still comprise a hub monitor and/or central monitor for monitoring purposes only). In these embodiments, the devices of the system can be "stand alone" devices which nevertheless co-operate with one another to form a distributed (non centralised) system. A particular advantage of these embodiments is that each device can be installed in a lamp post without the need, for example, to be placed in communication with (e.g. wired or wirelessly connected to) a hub controller or central controller. Furthermore, the devices do not need to be initiated with or assigned to other similar devices so as to form a system of co-operating devices. This facilitate the installation or retrofitting of devices to lamp posts in an ad-hoc manner.

Monitoring of the hubs and/or system may include, for example, fault monitoring. The devices may, for example, comprise fault detecting means for detecting faults (e.g. faults within the device itself or faults with the light that is controlled by the device). The fault that is detectable by the device may be, for example, a failure in the light. The device may therefore comprise fault detecting means able to detect that no (or a predetermined (low or high)) current is being drawn by the light.

The devices preferably further comprise transmitting means that are responsive to a fault being detected for transmitting a fault signal to a hub monitor and/or central monitor.

Communications between each device in the system and the hub controller/monitor and/or central controller/monitor may be established in any desired or suitable way. However, the preferred approach is to transmit communications signals between the hub controller/monitor and the devices via the electrical mains supply cables for the devices. In these embodiments, the communications signals are preferably transmitted via a frequency that is superimposed on the electrical mains supply frequency.

The communications from each device are preferably transmitted in the form of data packets. The hub controller/monitor preferably collates the data packets from the devices, and onwardly transmits the collated packet data to the central controller/monitor (e.g. a monitoring station of, for example, an energy provider). The collated packet data is preferably transmitted at a predetermined time (i.e. not as and when each data packet is received by the hub). Communications signals between the hub controller/monitor and the central controller/monitor are preferably transmitted wirelessly via microwave or radio frequency signals.

Preferably, the sensors of devices of adjacent lamp posts of the system have ranges sufficient to detect the presence of a person or vehicle within the area between the adjacent lamp posts. Preferably, the sensor range of each device in the system is at least 0.5 to 0.75 (e.g. at least 0.66) times the distance between adjacent lamp posts of the system.

Embodiments of the present invention will now be described by way of example only with reference to the accompanying figures in which:
Fig. 1 is a circuit diagram of a device according to an embodiment of the present invention.
Fig. 2 is a system for controlling public space lighting according to an embodiment of the present invention.

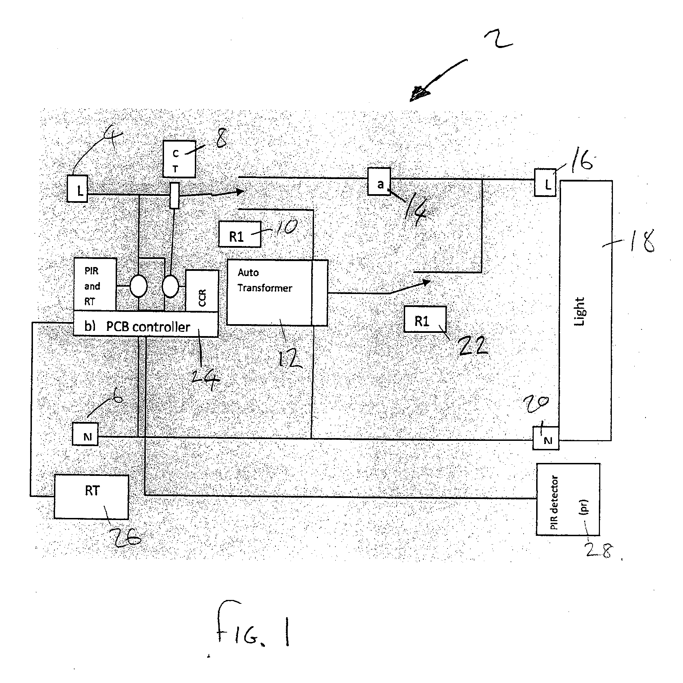

Fig. 1 shows a circuit diagram that forms part of a device 2 for controlling public space lighting. In this embodiment, the device 2 is incorporated in a lamp post for public space lighting.

The device 2 comprises a mains live terminal 4 and a mains neutral terminal 6 for connecting the device 2 to a mains supply voltage. The mains neutral terminal 6 is connected to the neutral terminal 20 of a public space light 18 (which, in this embodiment, is a sodium light of a lamp post). The mains live terminal 4 is connected via a current transformer 8 to a first relay 10. One output of the first relay 10 is connected to the live terminal 16 of the light 18 via a current sensor 14. Another output of the first relay is connected to the input of an autotransformer 12.

The output of the autotransformer 12 is connected to a second relay 22. The output of the second relay 22 is connected to the live terminal 16 of the light 18.

The autotransformer 12, first relay 10 and second relay 22 comprise a means for providing a first (decreased) voltage or a second (increased) voltage to the light 18. The first voltage is supplied to the light 18 when the mains live terminal 4 is connected to the autotransformer 12 by the first relay 10 and the output of the autotransformer 12 is connected to the light 18 by the second relay 22. The second voltage is supplied to the light 18 when the mains live terminal 4 is connected to the light 18 by the first relay 10 and the output of the autotransformer 12 is disconnected from the light 18 by the second relay 22.

The device 2 further comprises a sensor 28. The sensor 28 comprises a passive infrared (PIR) detector that can detect the presence of a person or vehicle (e.g. by detecting movement of a person or vehicle). The sensor 28 also includes a daylight sensor for detecting the amount of daylight.

The device 2 further comprises a radio transmitter/receiver 26. The transmitter/receiver 26 can transmit and/or receive signals indicating that the presence of a person or vehicle has been detected.

The sensor 28 and transmitter/receiver 26 are connected to a PCB controller 24. The PCB controller 24 controls the operation of the first relay 10 and the second relay 22.

Operation of the device 2 will now be described with reference to Fig. 1.

The device 2 monitors the daylight level by means of the sensor 28. When the daylight reduces to a pre-set level, PCB controller 24 switches on the light 18. This is achieved, at least in part, by the PCB controller 24 configuring the first relay 10 so as to connect the second (increased) voltage to the light 18.

The device 2 monitors the load supplied to the light 18 by means of the current sensor 14. When a load is detected by the current sensor 14, the PCB controller 24 starts a first timer. The second voltage is supplied to the light 18 for a pre-set time after the first timer has started, e.g. 10 minutes.

After the pre-set time has elapsed, the PCB controller 24 begins continuously or intermittently monitoring the output from the PIR detector of the sensor 28.

If the presence of a person or vehicle is not detected at any time during the monitoring, then the PCB controller will start a second timer. If the presence of a person or vehicle is not detected for a pre-set time after the second timer has started, the PCB controller energises the first relay 10 and second relay 22 such that the first (decreased) voltage is supplied to the light 18. This reduces the amount of energy consumed by the light 18 Whilst maintaining a low level of light output from the light 18.

If the presence of a person or vehicle is detected at any time during the monitoring, then the PCB controller 28 will supply (or continue to supply) the second (increased) voltage to the light 18. The device 2 may also transmit to other similar devices in other lamp posts within in a pre-set area (e.g. devices in lamp posts within 200m of the device 2) via the transmitter/receiver 26 a signal that indicates that the presence of a person or vehicle has been detected.

As will be discussed in more detail below, upon receipt of such a signal from the device 2, the other similar devices in the nearby lamp posts will operate their own relays so as to provide a second (increased) voltage to their own lights. Similarly, if the presence of a person or vehicle is indicated to the device 2 as being detected by another similar device in a nearby lamp post, then the PCB controller 28 will configure the first relay 10 and second relay 22 so as to supply the second (increased) voltage to the light 18.

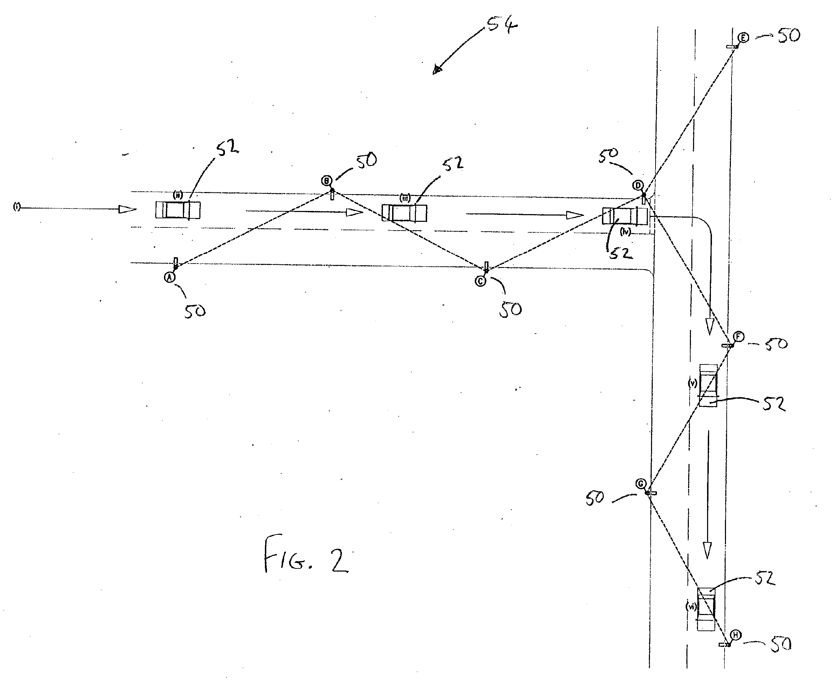

Operation of a system 54 for controlling public space lighting will now be described with reference to Fig. 2.

Fig. 2 shows a plurality of lamp posts 50 each having a device 2 according to the present invention. Fig. 2 also shows a vehicle 52 at various moments in time when moving within range of the system 54.

Prior to moment (i) in Fig. 2, all of the devices 2 in the lamp posts 50 supply the first (decreased) voltage to their respective lights 18 in the manner discussed above.

At moment (i), the sensor 28 of lamp post A detects the presence of the vehicle 52. In response to this, the device 2 in lamp post A increases the voltage supplied to the light 18 of that lamp post from the first voltage to the second voltage in the manner discussed above. The device 2 in lamp post A also transmits a signal via its transmitter/receiver 26 to lamp post B to indicate that a vehicle has been detected. In response to this, the device 2 in lamp post B increases the voltage supplied to the light 18 of that lamp post from the first voltage to the second voltage in the manner discussed above.

At moment (ii), the sensor 28 of lamp post B itself detects the presence of the vehicle 52. In response to this, the device 2 in lamp post B continues to supply the second voltage to the light 18 of lamp post B. The device 2 in lamp post B also transmits a signal via its transmitter/receiver 26 to lamp post C to indicate that a vehicle has been detected. In response to this, the device 2 in lamp post C increases the voltage supplied to the light 18 of that lamp post from the first voltage to the second voltage.

At moment (iii), the sensor 28 of lamp post C itself detects the presence of the vehicle 52. In response to this, the device 2 in lamp post C continues to supply the second voltage to the light 18 of lamp post C. The device 2 in lamp post C also transmits a signal via its transmitter/receiver 26 to lamp post D to indicate that a vehicle has been detected. In response to this, the device 2 in lamp post D increases the voltage supplied to the light 18 of that lamp post from the first voltage to the second voltage.

At this point, the sensor 28 of lamp post A has not detected the presence of a vehicle 52 for the pre-set time. Thus, the device 2 in lamp post A decreases the voltage supplied to the light 18 of that lamp post from the second voltage to the first voltage in the manner discussed above so as to reduce the energy consumption of the light of lamp post A.

At moment (iv), the sensor 28 of lamp post D itself detects the presence of the vehicle 52. In response to this, the device 2 in lamp post D continues to supply the second voltage to the light 18 of lamp post D. The device 2 in lamp post D also transmits a signal via its transmitter/receiver 26 to lamp posts E and F to indicate that a vehicle has been detected. In response to this, the devices 2 in both lamp post E and lamp post F increase the voltage supplied to their respective lights 18 from the first voltage to the second voltage.

At this point, the sensor 28 of lamp post B has not detected the presence of a vehicle 52 for the pre-set time. In response to this, the device 2 in lamp post B decreases the voltage supplied to the light 18 of that lamp post from the second voltage to the first voltage so as to reduce the energy consumption of the light of lamp post B.

At moment (v), the sensors 28 of lamp posts F and G detect the presence of the vehicle 52. In response to this, the device 2 in lamp post F continues to supply the second voltage to the light 18 of lamp post F and the device 2 in lamp post G increases the voltage supplied to the light 18 of lamp post G from the first voltage to the second voltage.

The sensor 28 of lamp post E, however, has not detected the presence of a vehicle 52 for the pre-set time. Thus, the device 2 in lamp post E decreases the voltage supplied to the light 18 of lamp post E from the second voltage to the first voltage so as to reduce the energy consumption of the light of lamp post E.

The device 2 in lamp post G transmits a signal via its transmitter/receiver 26 to lamp post H to indicate that a vehicle has been detected. In response to this, the device 2 in lamp post H increases the voltage supplied to the light 18 of lamp post H from the first voltage to the second voltage. The device 2 in lamp post E, however, does not transmit a signal via its transmitter/receiver 26 because that device has not detected the presence of a vehicle.

Also at this point, the sensor 28 of lamp posts C and D has not detected the presence of a vehicle 52 for the pre-set time. Thus, the devices 2 in lamp posts C and D decrease the voltage supplied to the lights 18 of those lamp posts from the second voltage to the first voltage so as to reduce the energy consumption of the lights 18 of those lamp posts.

At moment (vi), the sensor 28 of lamp post H itself detects the presence of the vehicle 52. In response to this, the device 2 in lamp post H continues to supply the second voltage to the light 18 of lamp post H.

At this point, the sensor 28 of lamp post F has not detected the presence of a vehicle 52 for the pre-set time. In response to this, the device 2 in lamp post F decreases the voltage supplied to the light 18 of lamp post F from the second voltage to the first voltage so as to reduce the energy consumption of the light of lamp post F.

As will be appreciated from the above, embodiments of the present invention provide devices and methods in which an increased voltage is provided to a light when a person or vehicle is detected by a device or is indicated as being detected by another device so that that person or vehicle is provided with a pool of bright light as they move around. Embodiments of the present invention also provide a reduced voltage to a light when no person or vehicle has been detected or indicated as being detected for a pre-set period of time, thereby allowing for savings in energy consumption to be made.

As will also be appreciated, the light is provided with a (decreased) voltage even when no person or vehicle has been detected. The resultant low level of light can give a feeling of security to people who are not detectable by the sensor of a device but can still see the light controlled by that device.

## Claims

1. A device (2) for controlling public space lighting, the device (2) comprising:
means (12) for providing a first voltage to a light (18) for a public space;
a sensor (28) for detecting the presence of a person or vehicle (52), and/or a receiver (26) configured to receive signals indicating that the presence of a person or vehicle (52) has been detected by another device;
means (10, 22) for increasing the voltage provided to the light (18) from the first voltage to a second voltage responsive to the presence of a person or vehicle (52) being detected by the sensor (28), and/or responsive to a received signal indicating that the presence of a person or vehicle (52) has been detected by another device;
means (10, 22) for decreasing the voltage provided to the light (18) from the second voltage to the first voltage after the presence of a person or vehicle (52) has not been detected and/or has not been indicated as being detected for a predetermined amount of time.

2. A device (2) as claimed in claim 1, comprising a transmitter (26) configured to transmit a signal to other devices indicating that the presence of a person or vehicle (52) has been detected by the sensor (28).

3. A device (2) as claimed in claim 1 or 2, comprising means (10) for providing the second voltage to the light (18) for a predetermined amount of time subsequent to the light (18) initially being switching on.

4. A device (2) as claimed in claim 1, 2 or 3, wherein increasing/decreasing the voltage provided to the light (18) causes the light level provided by the light (18) to increase/decrease.

5. A device (2) as claimed in any one of the preceding claims, wherein the first voltage has a first peak voltage and the second voltage has a second peak voltage, wherein the first peak voltage is lower than the second peak voltage.

6. A device (2) as claimed in claim 5, wherein the first peak voltage is in the range 120V to 210V and/or the second peak voltage is in the range 220 to 240V.

7. A device (2) as claimed in any one of the preceding claims, comprising a transformer (12), wherein the second voltage is provided to the input of the transformer (12) and the first voltage is provided by the output of the transformer (12).

8. A device (2) as claimed in claim 7, wherein the means (10,22) for increasing/decreasing the voltage provided to the light (18) comprises:
a relay (10) for connecting/disconnecting the second voltage to/from the light; and/or
a relay (22) for disconnecting/connecting the output of the transformer (12) from/to the light.

9. A device (2) as claimed in claim 7 or 8, wherein the means (10,22) for increasing/decreasing the voltage provided to the light (18) comprises:
a relay (10) for disconnecting/connecting the second voltage from/to the input of the transformer (12).

10. A device (2) as claimed in claim 7, 8 or 9, wherein the transformer (12) has a plurality of selectable output/input voltage ratios.

11. A device (2) as claimed in any one of claims 7 to 10, wherein an output/input voltage ratio of the transformer (12) is in the range 0.5 to 0.96.

12. A device (2) as claimed in any one of claims 7 to 11, wherein the transformer (12) is an autotransformer.

13. A lamp post (50) comprising:
a light (18) for lighting a public space; and
a device (2) as claimed in any one of the preceding claims.

14. A public space lighting system comprising a plurality of devices (2) as claimed in any one of claims 1 to 12 or a plurality of lamp posts (50) as claimed in claim 13.

15. A method of controlling public space lighting, comprising:
providing a first voltage to a light (18) for a public space;
detecting the presence of a person or vehicle (52), and/or receiving signals indicating that the presence of a person or vehicle (52) has been detected;
increasing the voltage provided to the light (18) from the first voltage to a second voltage responsive to the presence of a person or vehicle (52) being detected by the sensor, and/or responsive to a received signal indicating that the presence of a person or vehicle (52) has been detected;
decreasing the voltage provided to the light (18) from the second voltage to the first voltage after the presence of a person or vehicle (52) has not been detected and/or has not been indicated as being detected for a predetermined amount of time.
